# EUROPEAN PATENT SPECIFICATION

(11) **EP 1 593 457 B1**
(45) Date of publication and mention of the grant of the patent: **13.02.2008**
(21) Application number: 05103265.4
(22) Date of filing: 21.04.2005
(51) Int. Cl.: B23Q 39/04, B23Q 41/02, B23Q 7/04

(54) **Method and machine for mechanical working of pieces requiring at least two working cycles**
Verfahren und Maschine zur Bearbeitung von Werkstücken in mindestens zwei Zyklen.
Procédé et machine pour l'usinage de pièces en au moins deux cycles.

(30) Priority: 30.04.2004 IT TO20040269
(43) Date of publication of application: 09.11.2005
(73) Proprietor: FMT Future Manufacturing Technology S.r.l., 10121 Torino (IT)
(72) Inventor: Frari, Maurizio, I-10080 Bosconero (TO) (IT)
(74) Representative: Robba, Pierpaolo

(56) References cited:
- DE-A1- 3 631 718
- DE-A1- 19 607 320
- DE-A1- 19 648 810
- US-A- 5 451 185

## Description

The present invention concerns a method for mechanical working of pieces requiring at least two working cycles, and a machine for carrying out said method. (see, for example DE-19607320-A).

Mechanical working methods of pieces are known -for example drilling-, machining-, grinding methods and the like- which provide for at least two subsequent phases in which the piece undergoes two different working cycles in a quick sequence, for example for obtaining a bore and a bevel.

In other cases the piece undergoes at first a cycle of coarse working and afterwards is finished with a finer working cycle.

In any case the two or more working cycles have to be carried out well known with different tools.

Such workings comprise for example making bores or through openings in pieces in the automotive field, such as components of joints, or of ball joints, constant-velocity joints for power transmissions, such as the outer joint member (bell member), the inner core and the cage (corresponding to the italian terms "campana", "nucleo" and gabbia" respectively). It is well known that these cycles have to be carried out in a quick sequence for allowing high productions. A constant-velocity joint of this kind is described for example in US 05944612.

Known methods in general provide for three different solutions for carrying out the double working in quick sequence.

According to a first solution the piece is worked on two different machines, a suitable tool for the required working being set on each of these machines.

According to a second solution the piece is worked on the same machine which is nevertheless provided with two tool holding heads, tool chuck, tool stock or tool mandrel, each of which for carrying out its corresponding working cycle.

According to a third solution a machine is used provided with one tool chuck -or tool mandrel or tool stock- only, providing for automatic replacement of the tool so that each time the tool suitable for the corresponding working cycle is offered.

Nevertheless all these three known solutions are affected by a number of drawbacks.

A drawback of the first solution arises from the need of having two machines and of transferring the piece from a machine to the other during the working, with consequent increase of costs and of manufacturing times.

The second solution, even if more rational than the first one, is however affected by the drawback that it does not allow performing simultaneously two working cycles of different pieces by using both the tool chucks.

In fact, according to the teachings of the known art, in this solution the piece during working is processed at first with a tool, and after with the next tool, with no possibility of using the first tool for working a further piece.

The third solution is an intermediate solution between the two previous solutions, since it allows a lower productivity with respect to the second solution, due to the times for replacing the tools, but it turns out to be more efficient since using only one tool chuck.

A first object of the present invention is providing a method and a machine that allow solving the abovementioned drawbacks.

Another object of the present invention is providing a method and a machine for working mechanical pieces in an easy and not expensive way.

These and other objects are achieved with the methods and the machines according to the enclosed claims.

The method according to the invention defined in claim 1 provides for using simultaneously two working stations, each of which provided with its own carriage for loading/unloading pieces, said carriages being loaded with a blank or with a finished piece respectively. To this purpose the method provides for exchanging the unfinished piece between two carriages in an intermediate station, so that each piece is worked at first in a station, and after in the other one.

Advantageously, according to the invention defined in claim 10, the machine is provided with at least a couple of working stations, a couple of work holding heads and an intermediate exchange station so that the working stations can work simultaneously two pieces, a blank piece and an unfinished piece, thereby achieving a considerable saving of manufacturing times and hence of costs.

The invention will be described referring to a preferred embodiment shown in the enclosed Figures, in which:
Figure 1a is a schematic view of a machine according to a first embodiment of the invention, during the phase of loading pieces;
Figure 1b is a schematic view of the machine of Figure 1a, during the phase of working pieces;
Figure 1c is a schematic view of the machine of Figure 1a, during the phase of unloading pieces;
Figure 2a is a top schematic view of the carriages in a first embodiment;
Figure 2b is a schematic top view of the carriages in a second embodiment;
Figure 3a and 3b are schematic views of the machine in a second embodiment of the invention.

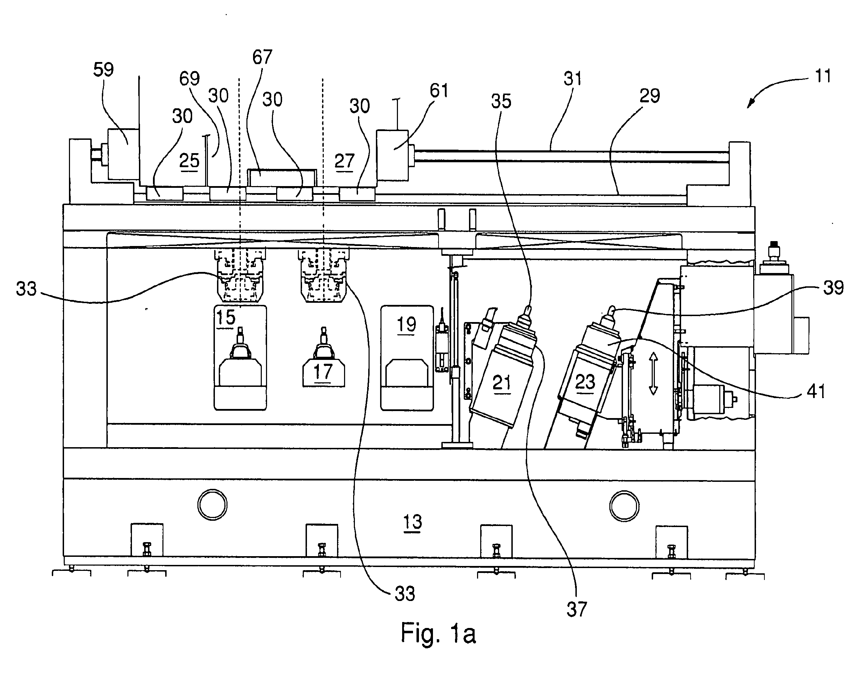

Referring to Figure 1a-1c the machine 11 according to the invention comprises a base 13 on which a first station 15 is provided for loading the blank pieces, a second exchange station 17 for loading and unloading the unfinished pieces, a third station 19 for unloading the finished pieces and a fourth and fifth station 21,23, for the first and second working cycle respectively that said pieces undergo in the machine 11.

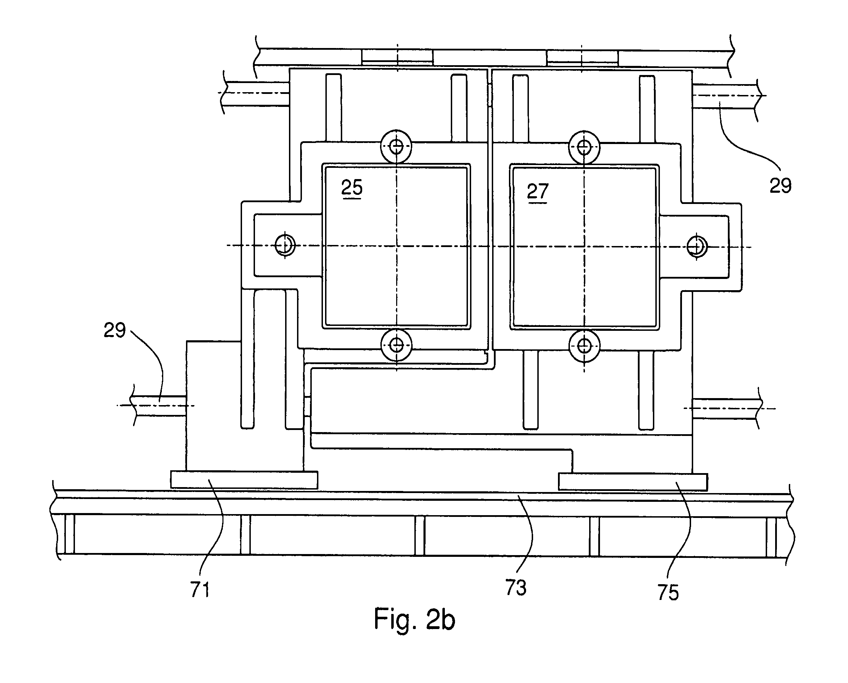

On the base 13, above the zone of the machine 11 in which said five stations 15-23 are provided, two carriages 25,27 are provided suitable for sliding along a pair of horizontal guides 29 by means of two sets of four sliding blocks 30 and driven by a fixed screw 31 -that is, a not rotatable screw 31- or, like it will appear more clearly from the following description referring to Figure 2b, by a two cursor linear motor.

Each of said carriages 25,27 is provided with a corresponding work holding head 33 provided with a mandrel or collet or similar device for clamping and retaining the pieces during transportation from one of said five stations 15-23 and during the working.

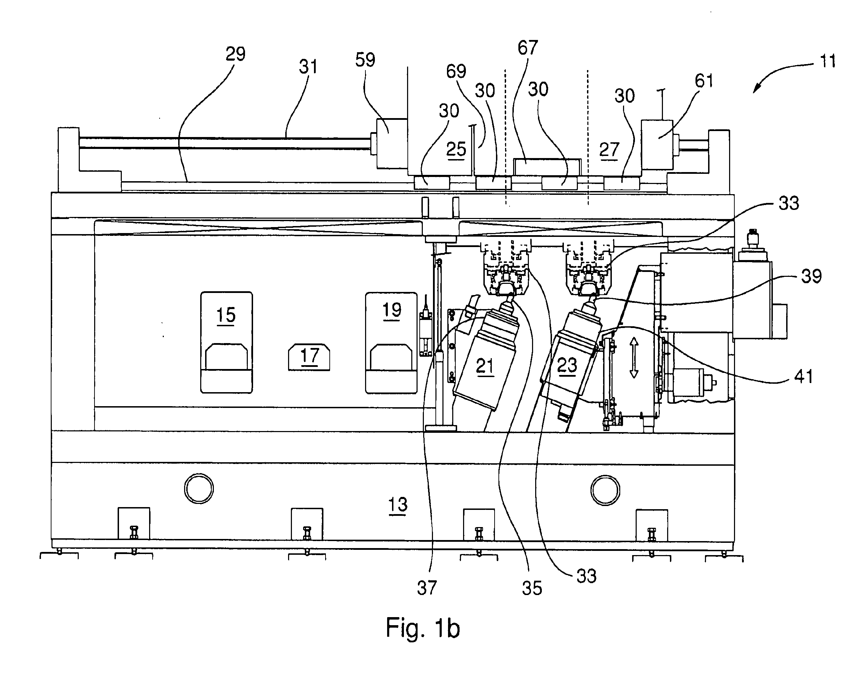

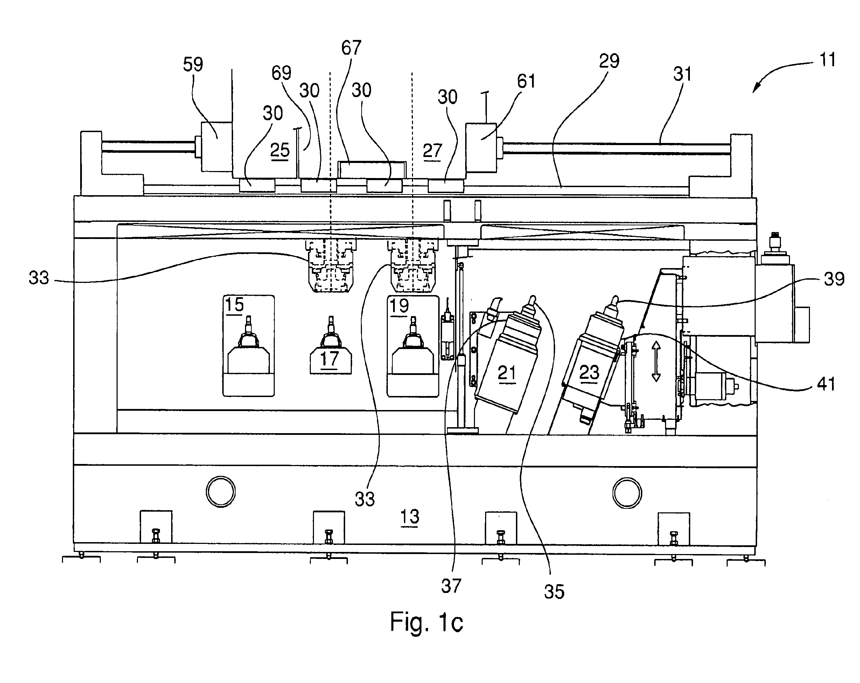

According to the invention, in the machine 11 the passage from the configurations shown in Figures 1a-1c is made by traversing the two carriages 25,27 at first from left to the right until the working position is reached (Figures 1a-1b), after from right to the left until an intermediate unloading position is reached (Figures 1b-1c), after again from right to the left until the starting position is reached again (from Figure 1c again to Figure 1a). Clearly it is also possible making a specular version of the machine 11, in which the directions of the traversing movements of the carriages and accordingly the arrangement of the stations are reversed.

Referring in particular to Figure 1a, the machine 11 according to the invention is shown when said carriages 25,27 are at the first and at the second station 15, 17 respectively.

With the corresponding head 33 the carriage 25 picks up the piece that is in the first loading station 15, while the second carriage 27 at the same time picks up the piece that previously underwent the first working cycle (unfinished) and that is in the second exchange station 17.

Referring to Figure 1b the machine 11 is shown when said carriages 25,27 are respectively at the fourth and fifth station 21,23, for making the piece undergo the first and the second working cycle.

More precisely the carriage 25, after having picked the blank piece up from the first loading station 15 is traversed at the fourth station 21 where the blank piece undergoes a first working cycle with a first tool 35 arranged on the mandrel 37, while the carriage 27 that picked the unfinished piece up from the second exchange station 17 now is at the fifth station 23 where the unfinished piece undergoes a second working cycle with a second tool 39 arranged on the mandrel 41.

Passing now to Figure 1c the machine 11 is shown when said carriages 25,27 are at the second exchange station 17 and at the third station 19 respectively; from the latter station the piece can be evacuated with known devices from the machine 11. When the machine 11 is in this configuration the unfinished piece which completed only the first part of the working cycle -since it has been worked by the first tool 35- is unloaded from carriage 25 in the second exchange station 17, while the finished piece that terminated the working cycle is unloaded in the third unloading station 19. In the machine 11 traversing the carriages 25,27, driving the work holding heads 33 and turning the mandrels 37,41 are controlled with corresponding electromechanical devices in a way *per se* known in the art and which does not need to be further described.

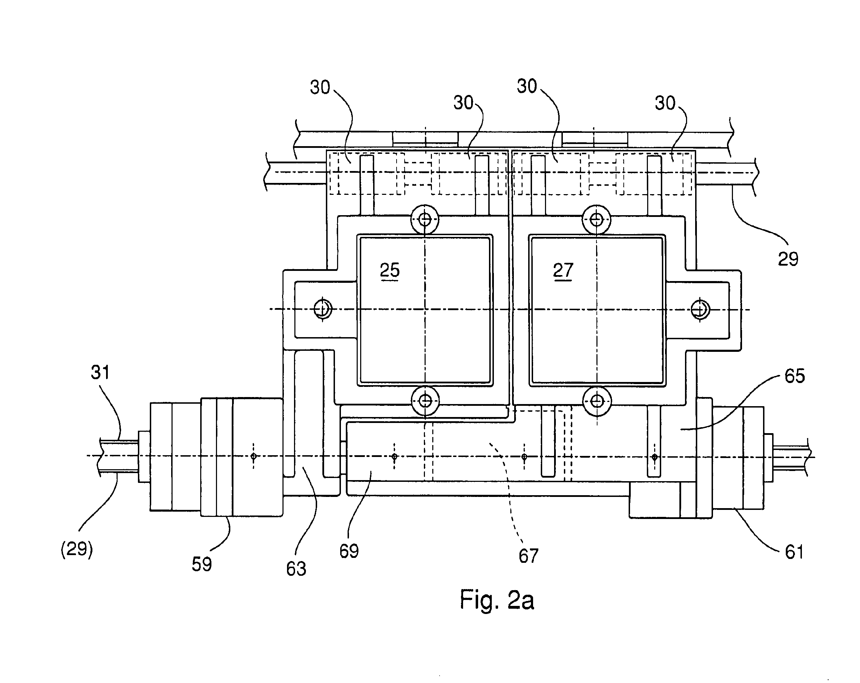

Figure 2a shows schematically a top view of the carriages 25,27 according to a first embodiment of the invention shown in Figures 1a-1c.

In Figure 2a the layout is shown of the carriages 25,27 relative to the horizontal guides 29, arranged above the stations 15-23 and the fixed screw 31, which is parallel to said guides 29 and is arranged above said guides (as better shown in Figures 1a-1c).

More precisely each carriage 25,27 is slidably arranged between said guides 29 and said screw 31 and comprises four sliding blocks 30 suitable for sliding on said horizontal guides 29. In the depicted example the number of said sliding blocks 30 is four for each guide 29.

Moreover each carriage 25,27 is provided with a corresponding motor 59,61 through which said fixed screw 31 passes and arranged like a cantilever on a respective support 63,65 protruding in side directions from said carriages 25,27 towards the screw 31.

Thanks said motors 59,61 which engage, with their rotor, with the screw 31, the carriages 25,27 can translate independently along the guides 29 so as to reach the different stations 15-23 of the machine 11. Moreover advantageously said motors 59,61 allow varying the relative position of the carriages 25,27 so as to restore the correct alignment of the work holding heads 33 with respect to said stations 15-23.

Advantageously, according to the invention, said supports 63,65 are made so as to allow said carriages to cooperate with each other so as to increase the surface on which they rest on said sliding blocks 30 slidingly supported by said guides 29.

More precisely, said supports 63,65 are shaped so as to define respective prolongations 67,69 which extend axially along said screw 31 beyond the perimeter of the corresponding carriage interlacing one with another.

As better shown in Figures 1a to 1c, said prolongation 69 of the second carriage 27 extends beyond the prolongation 67 of the first carriage 25 so as to reach and rest against the sliding block 30 which is adjacent to the motor 59 of said first carriage. Correspondingly, the prolongation 67 of said first carriage 25 extends so as to rest on the sliding block 30 which is adjacent to the motor 61 of the second carriage 27.

However between said carriages some axial play is maintained, so as to allow the reciprocal displacement and to be able to vary the respective distance.

Thanks to this arrangement of carriages 25,27 and to the shape of the corresponding supports 63,65 it is possible limiting the overall horizontal dimension of the group of carriages 25,27 and hence of the machine 11, obtaining at the same time a high stability during the translation movement along the guide 29.

Referring to Figure 2b, the layout of carriages 25,27 is shown in a schematic top view according to a second embodiment shown in Figures 1a to 1c.

In Figure 2b the carriages 25,27 are driven along the guides 29 by means of a two cursor linear motor.

In Figure 2b the primary part or cursor of the motor of carriage 25 is referred to with reference numeral 71, the primary part or cursor of the motor of the carriage 27 is referred to with the reference numeral 75 and the secondary part common to the two cursors is referred to with reference numeral 73.

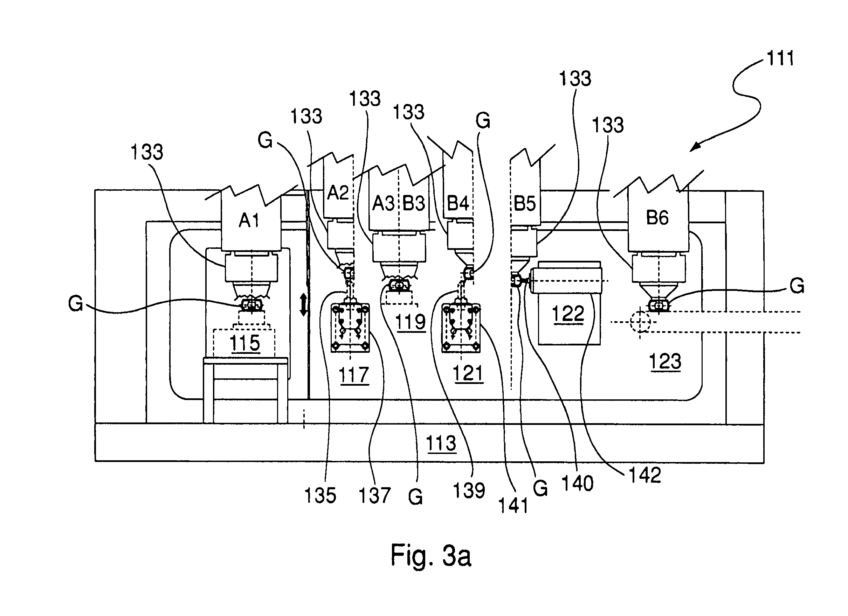

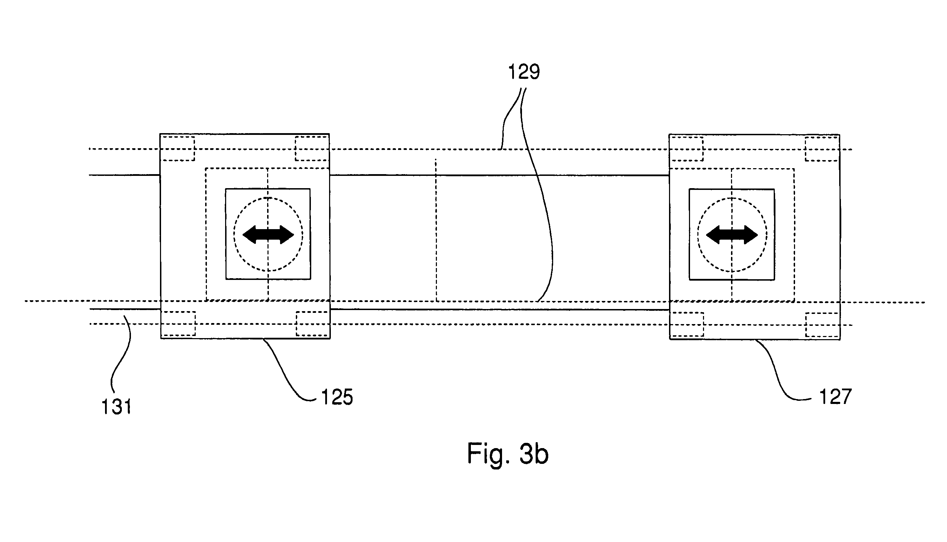

Referring to Figures 3a and 3b, a machine 111 is shown according to a second embodiment of the invention in which a cage G of a ball joint for power transmission is visible.

In this second embodiment the machine comprises a base 113 on which they are provided, from the left to the right:
- a first station 115 for loading blank pieces;
- a second station 117 for the first working cycle;
- a third exchange station 119, for loading and unloading the unfinished pieces;
- a fourth and fifth station 121,122 for a second and third working cycle which said pieces must undergo, and
- a sixth station 123 for unloading the finished pieces.

On the base 113, above the portion of machine 111 where said six stations 115-123 are defined, two motorised carriages 125,127 are provided which can slide along the horizontal guides 129 and driven by a fixed screw 131.

Also in this embodiment alternatively a two cursor linear motor can be provided, according to the scheme shown in Figure 2b.

Each of said carriages 125,127 is provided with a corresponding head 133 provided with a mandrel or chuck or such device for gripping and holding the pieces during the transport through said six stations 115-123 and during the working.

In Figure 3a the positions reached by the first and second carriage 125,127 respectively during the machine working cycle are referred to as with reference numerals A1,A2,A3 and B3,B4,B5,B6, wherein the letters A and B represent respectively the carriage 125,127 and the numbers 1 to 6 each of the six stations.

The shift to the different configurations shown in Figure 3a is made by translating the carriages 125,127 with a succession of movements from the left to the right and with a return movement from the right to the left. Nevertheless it is possible providing a specular version of machine 111 in which directions of the translation movement, and consequently the layout of the stations, are reversed.

During a first phase of the working cycle of machine 111 said carriages 125,127 are by the first and third station 115,119 respectively (positions A1,B3 in Figure 3a).

By means of the corresponding head 133 the carriage 125 loads the blank piece, which is on the first loading station 115, while the second carriage 127 picks up the piece (unfinished) that already underwent the first working cycle which is in the third exchange station 119.

Subsequently said carriages 125,127 translate towards the second and fourth station 117,121, in which the corresponding piece undergoes a first and second working cycle respectively (positions A2,B4 in Figure 3A).

More precisely, the carriage 125 which picked the blank piece up from the first loading station 115 is now at the second station 117 where the blank piece undergoes a first working cycle with a first tool 135 arranged on the tool holder 137, while the carriage 127 which picked the unfinished piece up from the second exchange station 117 is now at the fourth station 121 where the unfinished piece undergoes a second working cycle with a second tool 139 arranged on the tool holder 141.

In a further step the machine working cycle said second carriage 127 further translates so as to reach the fifth station 122 in which the piece undergoes a third working cycle with a third tool 140 arranged on the mandrel 142 (position B5 in Figure 3a).

In the next phase, said carriages 125,127 translate towards the third (exchange station) and sixth (unloading station) station 119,123 respectively, in which the corresponding piece is unloaded (positions A3,B6 in Figure 3a).

When the machine 111 is in such configuration the unfinished piece that completed only the first part of the working cycle, since it has been worked by the first tool 135, is downloaded from carriage 125 in the third station 119, while the finished piece that completed the working cycle is downloaded in the sixth station 123 for being evacuated from the machine 111 by means *per se* known.

In the machine 111 the translation of carriages 123,125, the control of heads 133 and the rotation of tool holders or mandrels 137,141,142 are controlled by corresponding electromechanical devices that a skilled technician knows per se, and therefore do not need to be further described.

## Claims

1. Method for mechanical working of pieces that need at least two working cycles, comprising the following steps:
a) providing a first blank piece that has to undergo said working cycles and a second unfinished piece that already underwent at least one of said working cycles, at a loading station (15;115) and at an exchange station (19;119) respectively; and **characterised by**
b) loading said first and second piece on a first and a second carriage (25, 27; 125, 127) , respectively;
c) moving said carriages (25,27;125,127) so as to bring said first and second piece at a first and second working station (21,23; 117, 121) in which said pieces undergo a first and a second working cycle;
d) subjecting said pieces to said first and second working cycle;
e) eventually repeating the steps c) and d) a predetermined number of times with at least one of said carriages so as to bring the relative piece at least to a third working station (122) in which said piece undergoes at least a third working cycle;
f) moving said carriages (25,27;125,127) so as to bring said first and second piece at said exchange station (17;119) and at an unloading station (19;123) respectively, in which said pieces are unloaded from said carriages (25,27;125,127);
g) moving said carriages (25,27;125,127) at said loading (15;115) and exchange station (17;119) respectively, and repeating the operations of steps a) to g).

2. Method according to claim 1, wherein said first and said second working cycle are carried out simultaneously.

3. Method according to claim 1, wherein said first and second carriage (25,27;125,127) are provided with a corresponding work holding head (33;133) and wherein each of said working stations (21,23; 117,121) is provided with a tool chuck, a tool stock (37,41), a tool mandrel or a tool holder (137,141).

4. Method according to claim 3, wherein said working cycles are carried out with different tools.

5. Method according to claim 1, wherein the movement of said carriages (25,27;125,127) is made by at least a horizontal translation.

6. Method according to claim 5, wherein the movements of said carriages (25,27;125,127) in step c) are performed in a direction and wherein both movements of said carriages in steps f) and g) are performed in an opposite direction.

7. Method according to claim 5, wherein both movements of said carriages (25,27;125,127) in steps c), e) and f) are performed in a direction and wherein the movements of said carriages (25,27;125,127) in step g) are performed in an opposite direction.

8. Method according to claim 5, wherein said carriages (25,27;125,127) translate simultaneously in said steps c), f) and g).

9. Method according to one or more of the preceding claims, wherein said first and said second working cycle correspond to a roughing cycle and to a finishing cycle respectively of the same piece, or at a sequence of finishing operations.

10. Machine for mechanical working of pieces which need at least two working cycles, said machine comprising:
- a base (13; 113);
- a plurality of stations (15-23;115-123) provided on said base, wherein said plurality of stations comprises a station for loading blank pieces, a station for exchanging unfinished pieces, at least two working stations for subjecting said pieces to a first and to a second working cycle, and a station for unloading finished pieces, and
- a pair of carriages (25,27;125,127) movable with respect to said base, a first of said carriages being suitable for transferring a first blank piece from said loading station at a first of said working stations and afterwards from said first working station to said exchange station, and a second of said carriages being suitable for transferring a second unfinished piece from said exchange station to a second of said working stations and afterwards from said second working station to said unloading station.

11. Machine according to claim 10, wherein said machine comprises a first station (15) for loading of blank pieces, a second exchange station (17) for loading and unloading unfinished pieces, a third station (19) for unloading finished pieces and a fourth and fifth station (21,23), for the first and second working cycle respectively that said pieces have to undergo in said machine.

12. Machine according to claim 10, said machine further comprising a first station (115) for loading blank pieces, a second station (117) for the first working cycle, a third exchange station (119), for loading and unloading unfinished pieces, a fourth and fifth station (121,122) for a second and third working cycle that said pieces have to undergo and a sixth station (123) for unloading the finished pieces.

13. Machine according to claim 10, wherein on said base (13;113), above the zone of the machine (11;11) in which said stations (15-23;115-123) are provided, said two carriages (25,27;125,127) are provided suitable for sliding along horizontal guides (29;129), said carriages (25, 27; 125, 127) being suitable to be driven by at least one fixed screw (31;131).

14. Machine according to claim 10, wherein on said base (13;113), above the zone of the machine (11;11) in which said stations (15-23;115-123) are provided, said two carriages (25,27;125,127) are provided suitable for sliding along horizontal guides (29;129), said carriages (25,27;125,127) being suitable to be driven by a linear motor (71,73,75) provided with at least a pair of corresponding cursors, at least one cursor for each carriage.

15. Machine according to claim 14, wherein said linear motors comprise a primary part or cursor (71) of the motor of the first carriage (25), a primary part or cursor (75) of the motor of the second carriage (27) and a secondary part (73) common to the two motors.

16. Machine according to claim 13 or 14 or 15, wherein each of said carriages (25,27;125,127) is provided with a corresponding work holding head (33;133) provided with a mandrel, a chuck or such device suitable for gripping and holding said pieces during the transport through said stations (15-23;115-123) and during the working.

17. Machine according to claim 11, wherein the transfer of pieces from said loading and exchange station to said first and second working station is carried out in a direction, and the transfer from said first working station to said exchange station and from said second working station to said unloading station is carried out in the opposite direction.

18. Machine according to claim 12, wherein the transfer of pieces from said loading and exchange station to said first and second working station is carried out in a direction, the transfer from said second working station to said third working station is carried out in the same direction, and the transfer from said first working station to said exchange station and from said third working station to said unloading station is carried out in the same direction.

19. Machine according to claim 16, wherein said first working station (21;117) comprises a first tool (35;135) arranged on a corresponding mandrel or tool holder (37;137) for subjecting the piece to a first working cycle and wherein said second working station (23;121) comprises a second tool (39;139) arranged on a corresponding mandrel or tool holder (41;141) for subjecting the piece to a second working cycle.

20. Machine according to claim 11 and 13, wherein each carriage (25,27) is slidably arranged between said horizontal guides (29) and said fixed screw (31) and comprises a plurality of corresponding sliding blocks (30) suitable for sliding on said guide (29).

21. Machine according to claim 20, wherein at least four of said sliding blocks (30) are provided for each guide (29).

22. Machine according to claim 21, wherein each carriage (25,27) is further provided with a respective motor (59,61) through which said fixed screw (31) passes, said motor being arranged like a cantilever on a respective support (63,65) which extends in a side direction from said carriages (25,27) towards said screw (31).

23. Machine according to claim 22, wherein said motors (59,61) allow varying the relative position of said carriages (25,27) in order to restore a proper alignment with respect to said stations (15-23).

24. Machine according to claim 23, wherein said supports (63,65) are made so as to allow said carriages to cooperate with each other so as to increase the surface on which they rest on said sliding blocks (30) slidingly supported by said said guides (29).

25. Machine according to claim 24, wherein said supports (63,65) are shaped so as to define respective prolongations (67,69) which extend axially along said screw (31) beyond the perimeter of the corresponding carriage interlacing one with another.

26. Machine according to claim 24, wherein the prolongation (69) of the second carriage (27) extends beyond the prolongation (67) of the first carriage (25) so as to reach and rest against the sliding block (30) which is adjacent to the motor (59) of said first carriage (25).

27. Machine according to claim 26, wherein some axial play is maintained between said carriages, so as to allow the reciprocal displacement and to be able to vary the respective distance.

## Patentansprüche

1. Verfahren zur Bearbeitung von Werkstücken, bei dem mindestens zwei Zyklen benötigt werden und das die folgenden Schritte umfasst:
a) Bereitstellung eines unbearbeiteten Werkstücks, das die Zyklen durchlaufen soll sowie ein zweites halbfertiges Werkstück, das bereits mindestens einen der Arbeitszyklen durchlaufen hat und zwar jeweils an einer Ladestation (15; 115) und an einer Wechselstation (19; 119),
**dadurch gekennzeichnet, dass**
b) das erste und zweite Werkstück jeweils auf einen ersten und zweiten Wagen (25, 27; 125, 127) geladen wird;
c) Transport der Wagen (25, 27; 125, 127), um das erste und zweite Werkstück an eine erste und zweite Arbeitsstation (21, 23; 117, 121) zu verbringen, in der die Werkstücke einen ersten und zweiten Arbeitszyklus durchlaufen;
d) Durchführung des ersten und zweiten Arbeitszyklus an den Werkstücken;
e) eventuelle Wiederholung der Schritte c) und d) in einer vorbestimmten Anzahl mit mindestens einem der Wagen, um das entsprechende Werkstück mindestens einer dritten Arbeitsstation (122) zuzuführen, in der das Werkstück mindestens einen dritten Arbeitszyklus durchläuft;
f) Transport der Wagen (25, 27; 125, 127) um das erste und zweite Werkstück jeweils in die Wechselstation (17; 119) und eine Entladestation (19; 123) zu verbringen, in denen die Werkstücke aus den Wagen (25, 27; 125, 127) entladen werden;
g) Transport der Wagen (25, 27; 125, 127) jeweils an die Ladestation (15; 115) und die Entladestation (17; 119) und Wiederholung der Schritte a) bis g).

2. Verfahren nach Anspruch 1, wobei der erste und zweite Arbeitszyklus gleichzeitig ausgeführt werden.

3. Verfahren nach Anspruch 1, wobei der erste und zweite Wagen (25, 27; 125, 127) mit einem entsprechenden Werkzeughalterkopf (33; 133) versehen sind und jede Arbeitsstation (21, 23; 117, 121) mit einem Werkzeugspannfutter, einem Werkzeugträger (37, 41), einer Werkzeugspindel oder Werkzeughalter (137, 141) ausgerüstet ist.

4. Verfahren nach Anspruch 3, wobei jene Arbeitszyklen mit unterschiedlichen Werkzeugen ausgeführt werden.

5. Verfahren nach Anspruch 1, wobei die Bewegung der Wagen (25, 27; 125, 127) durch mindestens eine horizontale Translation erfolgt.

6. Verfahren nach Anspruch 5, wobei die Bewegungen der Wagen (25, 27; 125, 127) im Verfahrensschritt c) in einer Richtung verwirklicht werden und wobei die beiden Bewegungen jener Wagen in den Verfahrensschritten f) und g) in der entgegengesetzten Richtung ausgeführt werden.

7. Verfahren nach Anspruch 5, wobei beide Bewegungen der Wagen (25, 27; 125, 127) in den Schritten c), e) und f) in einer Richtung verwirklicht werden und wobei die Bewegungen jener Wagen (25, 27; 125, 127) in Schritt g) in der entgegengesetzten Richtung ausgeführt werden.

8. Verfahren nach Anspruch 5, wobei die Wagen (25, 27; 125, 127) in den Stufen c), f) und g) gleichzeitig verfahren.

9. Verfahren nach einem oder mehreren der vorausgehenden Ansprüche, wobei jener erste und zweite Arbeitszyklus einem Vorbearbeitungszyklus und einem Fertigbearbeitungszyklus an jeweils demselben Werkstück oder einer Abfolge von Fertigbearbeitungsvorgängen entsprechen.

10. Maschine zur mechanischen Bearbeitung von Werkstücken, die mindestens zwei Arbeitszyklen erfordern und die Folgendes umfasst:
- das Gestell (13; 113)
- eine Vielzahl von an jenem Gestell vorgesehenen Stationen (15-23; 115-123), wobei jene Vielzahl von Stationen eine Station zum Laden eines unbearbeiteten Werkstücks aufweist, eine Station zum Austausch nicht fertig bearbeiteter Werkstücke, mindestens zwei Arbeitsstationen, um jene Werkstücke einem ersten und zweiten Arbeitszyklus zu unterziehen sowie eine Station zum Entladen fertigbearbeiteter Werkstücke, und
- ein in Bezug auf das Gestell bewegliches Wagenpaar (25, 27; 125, 127), ein erster jener Wagen, der zum Transfer eines ersten unbearbeiteten Werkstücks von der Ladestation in eine erste jener Arbeitsstationen und danach von jener ersten Arbeitsstation in die Wechselstation geeignet ist, sowie ein zweiter dieser Wagen, der zum Transfer eines zweiten unbearbeiteten Werkstücks von der Wechselstation in eine zweite Arbeitsstation und daraufhin von der zweiten Arbeitsstation in eine Entladestation ausgelegt ist.

11. Maschine nach Anspruch 10, wobei die Maschine eine erste Station (15) zum Laden unbearbeiteter Werkstücke umfasst, eine zweite Wechselstation (17) zum Laden und Entladen nicht fertig bearbeiteter Werkstücke, eine dritte Station (19) zum Entladen fertiggestellter Werkstücke sowie eine vierte und fünfte Station (21, 23) für jeweils den ersten und zweiten Arbeitszyklus, dem die Werkstücke in der Maschine unterzogen werden.

12. Maschine nach Anspruch 10, wobei jene Maschine weiterhin eine erste Station (115) zum Laden unbearbeiteter Werkstücke, eine zweite Station (117) für den ersten Arbeitszyklus, eine dritte Wechselstation (119) zum Laden und Entladen nicht fertig bearbeiteter Werkstücke, eine vierte und fünfte Station (121, 122) für einen zweiten und dritten Arbeitszyklus, den jene Werkstücke zu durchlaufen haben sowie eine sechste Station (123) zum Entladen der fertiggestellten Werkstücke umfasst.

13. Maschine nach Anspruch 10, wobei auf jenem Gestell (13; 113) oberhalb des Maschinenbereichs (11; 11), in dem die Stationen (15-23; 115-123) vorgesehen sind, jene beiden Wagen (25, 27; 125, 127) zum Gleiten entlang horizontaler Führungen (29; 129) zweckdienlich bereitgestellt sind und jene Wagen (25, 27; 125, 127) von mindestens einer festen Gewindespindel (31; 131) in geeigneter Weise angetrieben werden können.

14. Maschine nach Anspruch 10, wobei auf jenem Gestell (13; 113) oberhalb des Maschinenbereichs (11; 11), in dem die Stationen (15-23; 115-123) vorgesehen sind, jene beiden Wagen (25, 27; 125, 127) zum Gleiten entlang horizontaler Führungen (29; 129) zweckdienlich bereitgestellt sind und jene Wagen (25, 27; 125, 127) in geeigneter Weise von einem Linearmotor (71, 73, 75) angetrieben werden können, der mit mindestens einem Paar entsprechender Schieber ausgerüstet ist, mindestens jedoch einem Schieber für jeden Wagen.

15. Maschine nach Anspruch 14, wobei jene Linearmotore ein Primärteil oder Schieber (71) des Motors des ersten Wagens (25) aufweisen, einen Primärteil oder Schieber (75) des Motors des zweiten Wagens (27) sowie einen den beiden Motoren gemeinsamen Sekundärteil (73).

16. Maschine nach Anspruch 13 oder 14 oder 15, wobei jeder der Wagen (25, 27; 125, 127) mit einem entsprechenden Werkzeughalterkopf (33; 133) ausgestattet ist, der mit einem Spanndorn, einem Futter oder einer derartigen zum Greifen und Halten jener Werkstücke während des Transports durch die Stationen (15-23; 115-123) und bei der Bearbeitung geeigneten Vorrichtung ausgerüstet ist.

17. Maschine nach Anspruch 11, wobei der Transfer der Werkstücke von der Ladestation und Wechselstation zu jener ersten und zweiten Arbeitsstation in einer Richtung erfolgt und der Transfer von der ersten zu jener Wechselstation und von der zweiten Arbeitsstation in die Entladestation in der entgegengesetzten Richtung ausgeführt wird.

18. Maschine nach Anspruch 12, wobei der Transfer der Werkstücke von der Ladestation und Wechselstation in die erste und zweite Arbeitsstation in einer Richtung durchgeführt wird, der Transfer von der zweiten Arbeitsstation zu der dritten Arbeitsstation in derselben Richtung erfolgt und der Transfer von der ersten Arbeitsstation in die Wechselstation und von der dritten Arbeitsstation zu der Entladestation in derselben Richtung erfolgt.

19. Maschine nach Anspruch 16, wobei die erste Arbeitsstation (21; 117) ein erstes Werkzeug (35; 135) aufweist, das auf einer entsprechenden Spindel oder Werkzeughalter (37; 137) angeordnet ist, um das Werkstück einem ersten Arbeitszyklus zu unterziehen, wobei die zweite Arbeitsstation (23; 121) ein zweites, auf einer entsprechenden Spindel oder Werkzeughalter (41; 141) angeordnetes Werkzeug aufweist, um das Werkstück einem zweiten Arbeitszyklus zu unterziehen.

20. Maschine nach Anspruch 11 und 13, wobei jeder Wagen (25, 27) zwischen den horizontalen Führungen (29) und der festen Gewindespindel (31) gleitend angeordnet ist und eine Vielzahl von entsprechenden Gleitschuhen (30) umfasst, die zum Gleiten auf der Führung (29) geeignet sind.

21. Maschine nach Anspruch 20, wobei mindestens vier jener Gleitschuhe (30) für jede Führung (29) vorgesehen sind.

22. Maschine nach Anspruch 21, wobei jeder Wagen (25, 27) des weiteren jeweils mit einem Motor (59, 61) ausgestattet ist, durch den jene feste Gewindespindel (31) hindurchgeführt ist und dieser Motor wie ein Vorsprung an einem jeweiligen Träger (63, 65) angeordnet ist, der sich in seitlicher Richtung von den Wagen (25, 27) zur Gewindespindel (31) hin erstreckt.

23. Maschine nach Anspruch 22, wobei jene Motore (59, 61) es ermöglichen, die Relativlage der Wagen (25, 27) zu verändern, um eine genaue Ausrichtung in Bezug auf die Stationen (15-23) zustande zu bringen.

24. Maschine nach Anspruch 23, wobei jene Träger (63, 65) so ausgebildet sind, dass sie ein Zusammenwirken der Wagen miteinander ermöglichen, um so die Fläche zu vergrößern, auf der sie auf den Gleitschuhen (30) aufliegen, die von den Führungen (29) gleitend abgestützt werden.

25. Maschine nach Anspruch 24, wobei die Träger (63, 65) so geformt sind, dass sie jeweils Verlängerungen (67, 69) bilden, die sich, einander überlappend, axial längs der Gewindespindel (31) über den Umfang des entsprechenden Wagens hinweg erstrecken.

26. Maschine nach Anspruch 24, wobei die Verlängerung (69) des zweiten Wagens (27) über die Verlängerung (67) des ersten Wagens reicht, um so den sich an den Motor des ersten Wagens (25) angrenzenden Gleitschuh (30) zu erreichen und sich an ihm abzustützen.

27. Maschine nach Anspruch 26, wobei zwischen den Wagen ein gewisses Axialspiel aufrechterhalten wird, um wechselseitige Verlagerungen zuzulassen und den jeweiligen Abstand variieren zu können.

## Revendications

1. Procédé pour l'usinage de pièces qui requièrent au moins deux cycles d'usinage, comprenant les phases suivantes:
a) préparer une première pièce vierge qui doit être soumise à ces cycles d'usinage et une deuxième pièce non finie qui a été déjà soumise à au moins un de ces cycles d'usinage, en correspondance respectivement d'une station de chargement (15;115) et d'une station d'échange (19;119);
et **caractérisé par** le fait de
b) charger cette première et cette deuxième pièce respectivement sur un premier et sur un deuxième chariot (25,27; 125,127) ;
c) déplacer ces chariots (25,27;125,127) de façon à emmener cette première et cette deuxième pièce à une première et à une deuxième station d'usinage (21,23; 117,121) où ces pièces sont soumises à un premier et à un deuxième cycle d'usinage;
d) soumettre ces pièces à ce premier et à ce deuxième cycle d'usinage;
e) répéter éventuellement les phases c) et d) pour un nombre de fois préfixé avec au moins un chariot, de façon à emmener la pièce correspondante au moins à une troisième station d'usinage (122) où cette pièce est soumise à au moins un troisième cycle d'usinage;
f) déplacer ces chariots (25,27;125,127) de façon à emmener cette première et cette deuxième pièce respectivement à cette station d'échange (17;119) et à une station de déchargement (19;123), où ces pièces sont déchargés de ces chariots (25,27;125,127);
g) déplacer ces chariots (25,27;125,127) respectivement à cette station de chargement (15;115) et à cette station d'échange (17;119) et répéter les opérations des phases de a) à g).

2. Procédé selon la revendication 1, dans lequel ce premier et ce deuxième cycle d'usinage sont réalisés simultanément.

3. Procédé selon la revendication 1, dans lequel ces premier et deuxième chariots (25,27;125,127) sont équipés avec une tête porte-pièce (33;133) correspondante et dans lequel chacune de ces stations d'usinage (21,23; 117,121) est équipé avec un outil d'emmanchement, un mandrin (37,41) un outil à mandriner ou un porte-outil (137,141).

4. Procédé selon la revendication 3, dans lequel ces cycles d'usinage sont réalisés avec d'outils différents.

5. Procédé selon la revendication 1, dans lequel le déplacement de ces chariots (25,27;125,127) est effectué par au moins une translation horizontale.

6. Procédé selon la revendication 5, dans lequel les déplacements de ces chariots (25,27;125,127) au cours de la phase c) sont effectués dans une direction et dans lequel les déplacements de ces chariots (25,27;125,127) au cours de la phase f) ainsi que de la phase g) sont effectués dans la direction opposée.

7. Procédé selon la revendication 5, dans lequel les déplacements de ces chariots (25,27;125,127) au cours des phases c), e) et f) sont effectués dans une direction et dans lequel les déplacements de ces chariots (25,27;125,127) au cours de la phase g) sont effectués dans la direction opposée.

8. Procédé selon la revendication 5, dans lequel ces chariots (25,27; 125,127) sont déplacés en translation simultanément au cours de ces phases c), f) et g).

9. Procédé selon une ou plusieurs des revendications précédentes, dans lequel ce premier cycle d'usinage et ce deuxième cycle d'usinage correspondent respectivement à un cycle d'ébauchage et à un cycle de finissage de la même pièce, ou bien à une séquence d'opérations de finissage.

10. Machine pour l'usinage de pièces qui requièrent au moins deux cycles d'usinage, cette machine comprenant:
- une base (13;113);
- une pluralité de stations (15-23;115-123) prévues sur cette base, dans laquelle cette pluralité de stations comprend une station pour charger pièces vierges, une station pour échanger pièces non finies, au moins deux stations d'usinage pour soumettre ces pièces à un premier et à un deuxième cycle d'usinage et une station pour décharger pièces finies, et
- une couple de chariots (25,27; 125,127) qui peuvent se déplacer par rapport à cette base, un premier de ces chariots étant apte à transférer une première pièce vierge de cette station de chargement à une première de ces stations d'usinage et successivement de cette première station d'usinage à cette station d'échange, et un deuxième de ces chariots étant apte à transférer une deuxième pièce non finie de cette station d'échange à une deuxième de ces stations d'usinage et successivement de cette deuxième station d'usinage a cette station de déchargement.

11. Machine selon la revendication 10, dans laquelle cette machine comprend une première station (15) pour charger pièces vierges, une deuxième station d'échange (17) pour charger et décharger pièces non finies, une troisième station (19) pour décharger pièces finies et une quatrième et une cinquième stations (21,23) respectivement pour le premier et le deuxième cycle d'usinage auxquels ces pièces doivent être soumises dans cette machine.

12. Machine selon la revendication 10, cette machine comprenant en outre une première station (115) pour charger pièces vierges, une deuxième station (117) pour le premier cycle d'usinage, une troisième station d'échange (119) pour charger et décharger pièces non finies et une quatrième et une cinquième stations (121,122) pour un deuxième et un troisième cycle d'usinage auxquels ces pièces doivent être soumises et une sixième station (123) pour décharger les pièces finies.

13. Machine selon la revendication 10, dans laquelle sur cette base (13;113), au-dessus de la région de la machine (11;11) dans laquelle ces stations (15-23 ;115-123) sont prévues, ces deux chariots (25,27;125,127) sont prévus, aptes à glisser sur coulisseaux horizontaux (29;129), ces chariots (25,27;125,127) pouvant être actionnés par au moins une vis fixe (31;131).

14. Machine selon la revendication 10, dans laquelle sur cette base (13;113), au-dessus de la région de la machine (11;11) dans laquelle ces stations (15-23 ;115-123) sont prévues, ces deux chariots (25,27;125,127) sont prévus, aptes à glisser sur coulisseaux horizontaux (29;129), ces chariots (25,27;125,127) pouvant être actionnés par un moteur linéaire (71,73,75) équipé avec au moins une couple de curseurs correspondants, au moins un curseur pour chaque chariot.

15. Machine selon la revendication 14, dans laquelle ces moteurs linéaires comprennent une partie primaire ou curseur (71) du moteur du premier chariot (25), une partie primaire ou curseur (75) du moteur du deuxième chariot (27) et une partie secondaire (73) commun aux deux moteurs.

16. Machine selon la revendication 13 ou 14 ou 15, dans laquelle chacun de ces chariots (25,27;125,127) est équipé avec une tête porte-pièce correspondante (33;133) pourvue d'un mandrin, d'un mandrin de serrage ou d'un outil similaire apte pour serrer et retenir ces pièces pendant les transferts à travers ces stations (15-23;115-123) et pendant l'usinage.

17. Machine selon la revendication 11, dans laquelle les transferts de pièces de cette station de chargement et de cette station d'échange à cette première et à cette deuxième station d'usinage sont réalisés dans une direction, alors que les transferts de cette première station d'usinage à cette station d'échange et de cette deuxième station d'usinage à cette station de déchargement sont réalisés dans la direction opposée.

18. Machine selon la revendication 12, dans laquelle les transferts de pièces de cette station de chargement et de cette station d'échange à cette première et à cette deuxième station d'usinage sont réalisés dans une direction et le transfert de cette deuxième station d'usinage à cette troisième station d'usinage est réalisé dans la même direction, et les transferts de cette première station d'usinage à cette station d'échange et de cette troisième station d'usinage à cette station de déchargement sont réalisés dans la direction opposée.

19. Machine selon la revendication 16, dans laquelle cette première station d'usinage (21;117) comprend un premier outil (35;135) disposé sur un mandrin ou un porte-outil (37;137) correspondant pour soumettre la pièce à un premier cycle d'usinage et dans laquelle cette deuxième station d'usinage (23;121) comprend un deuxième outil (39;139) disposé sur un mandrin ou un porte-outil (41;141) correspondant pour soumettre la pièce à un deuxième cycle d'usinage.

20. Machine selon les revendications 11 et 13, dans laquelle chaque chariot (25,27) est disposé de façon à pouvoir glisser entre ces coulisseaux horizontaux (24) et cette vis fixe (31) et il comprend une pluralité de patins glissants (30) correspondants pour glisser sur ces coulisseaux (29).

21. Machine selon la revendication 20, dans laquelle au moins quatre de ces patins glissants (30) sont prévus pour chaque coulisseau (29).

22. Machine selon la revendication 21, dans laquelle chaque chariots (25,27) est en outre équipé avec un respectif moteur (59,61), traversé par cette vis fixe, ce moteur étant disposé en porte-à-faux sur un respectif support (63,65) qui s'étend latéralement à partir de ces chariots (25,27) vers cette vis (31).

23. Machine selon la revendication 22, dans laquelle ces moteurs (59,61) permettent de varier la position relative de ces chariots (25,27) pour rétablir un correct alignement par rapport à ces stations (15-23).

24. Machine selon la revendication 23, dans laquelle ces supports (63,65) sont réalisés de façon à permettre à ces chariots de coopérer entre eux afin d'augmenter la surface sur laquelle ils s'appuient sur ces patins glissants (30), qui sont supportés par ces coulisseaux (29) de façon a pouvoir glisser sur eux.

25. Machine selon la revendication 24, dans laquelle ces supports (63,65) sont façonnés de façon à définir respectifs prolongements (67,69) qui s'étendent en direction axiale le long de cette vis (31) au delà du périmètre du chariot correspondant, en s'accrochant l'un à l'autre.

26. Machine selon la revendication 24, dans laquelle le prolongement (69) du deuxième chariot (27) s'étend au delà du prolongement (67) du premier chariot (25) de façon à rejoindre et s'appuyer sur le patin glissant (30) qui est adjacent au moteur (59) de ce premier chariot (25).

27. Machine selon la revendication 26, dans laquelle un certain jeu axial est maintenu entre ces chariots, de façon à en permettre le déplacement réciproque et à pouvoir en varier la distance relative.
